# EUROPÄISCHE PATENTSCHRIFT

(11) **EP 4 095 207 B1**
(45) Veröffentlichungstag und Bekanntmachung des Hinweises auf die Patenterteilung: **09.12.2026**
(21) Anmeldenummer: 22175070.6
(22) Anmeldetag: 24.05.2022
(51) Int. Cl.: C09D 11/101, C09D 133/00

(54) **STRAHLUNGSHÄRTBARE ZUSAMMENSETZUNG**
RADIATION-CURABLE COMPOUND
COMPOSITION DURCISSABLE PAR EXPOSITION À UN RAYONNEMENT

(30) Priorität: 28.05.2021 EP 21176630
(43) Veröffentlichungstag der Anmeldung: 30.11.2022
(73) Patentinhaber: Marabu GmbH & Co. KG, 71732 Tamm (DE)
(72) Erfinder: Volkmann, Jürgen, 73779 Deizisau (DE)
(74) Vertreter: Patentanwälte Ruff, Wilhelm, Beier, Dauster & Partner mbB

(56) Entgegenhaltungen:
- EP-A1- 2 439 244
- WO-A1-2016/179213
- US-A- 5 837 750
- US-A1- 2020 255 682

## Beschreibung

### ANWENDUNGSGEBIET UND STAND DER TECHNIK

Die Erfindung betrifft eine strahlungshärtbare, vorzugsweise UV-härtbare, Zusammensetzung, ein Verfahren zum Beschichten, insbesondere Bedrucken, eines Substrats, ein Substrat, das mit der strahlungsgehärteten, vorzugsweise UV-gehärteten, Zusammensetzung beschichtet, insbesondere bedruckt, ist, ein Kit zum Beschichten, insbesondere Bedrucken, eines Substrats sowie einen Tintensatz.

Um Substraten, wie beispielsweise Trinkgläsern und Flaschen, strukturierte Oberflächen zu verleihen, werden häufig spezielle Gussformen verwendet. Diese Technologie ist jedoch aufwendig und teuer und daher nur im Falle der Herstellung großer Stückzahlen wirtschaftlich sinnvoll.

Deswegen werden Oberflächenstrukturierungen zunehmend mittels Digitaldruck unter Verwendung UV-härtbarer Tintenzusammensetzungen erzeugt. Ein entsprechendes Verfahren ist beispielsweise aus der US 10,752,538 B1 bekannt.

Nachteilig bei aus dem Stand der Technik bekannten Digitaldruckverfahren ist jedoch, dass die Druckqualität, insbesondere in Bezug auf Kantenschärfe und Auflösung, oftmals unbefriedigend ausfällt. Ein weiteres Problem besteht darin, dass in der Regel ein vielfaches Überdrucken erforderlich ist, wodurch sich die Druckgeschwindigkeit verringert. Hinzu kommt, dass sich derart aufgebrachte Oberflächenstrukturen häufig als nicht ausreichend mechanisch robust und/oder spülmaschinenfest erweisen. Dies ist insbesondere bei entsprechend oberflächenstrukturierten Flaschen und/oder Trinkgläser problematisch.

Aus der US 5,837,750 ist eine aushärtbare, äußere Primärbeschichtung für optische Glasfaser bekannt. Die äußere Primärbeschichtung weist ein Polyetherurethanoligomer mit ethylenisch ungesättigten Gruppen, ein reaktives Verdünnungsmittel, einen Fotoinitiator, ein Pigment sowie ein strahlungshärtbares Oligomer auf.

### AUFGABE UND LÖSUNG

Die Erfindung stellt sich daher die Aufgabe, eine strahlungshärtbare, vorzugsweise UV-härtbare, Zusammensetzung bereitzustellen, die die eingangs im Zusammenhang bekannter Zusammensetzungen genannten Nachteile wenigstens teilweise vermeidet. Weiter stellt sich die Erfindung die Aufgabe, ein Verfahren zum Beschichten eines Substrats sowie ein mit der strahlungsgehärteten, insbesondere UV-gehärteten, Zusammensetzung beschichtetes Substrat bereitzustellen.

Diese Aufgaben werden gelöst durch eine strahlungshärtbare, vorzugsweise UV-härtbare, Zusammensetzung mit den Merkmalen des unabhängigen Anspruchs 1, ein Verfahren zum Beschichten, insbesondere Bedrucken, eines Substrats gemäß Anspruch 14 sowie durch ein Substrat gemäß Anspruch 15. Bevorzugte Ausgestaltungen der Erfindung sind in den abhängigen Ansprüchen sowie in der Beschreibung definiert. Der Wortlaut sämtlicher Ansprüche wird hiermit durch Bezugnahme ausdrücklich zum Inhalt dieser Beschreibung gemacht.

Gemäß einem ersten Aspekt betrifft die Erfindung eine strahlungshärtbare, vorzugsweise UV-härtbare, Zusammensetzung, aufweisend
- wenigstens ein monofunktionelles Acrylat-Monomer und/oder wenigstens ein monofunktionelles Methacrylat-Monomer und/oder wenigstens ein monofunktionelles Acrylamid-Monomer,
- wenigstens ein multifunktionelles Acrylat-Monomer und/oder wenigstens ein multifunktionelles Methacrylat-Monomer
   und
- wenigstens ein Oligomer und/oder wenigstens ein Polymer.

Die Erfindung zeichnet sich dadurch aus, dass die strahlungshärtbare, vorzugsweise UV-härtbare, Zusammensetzung bei 40°C eine Viskosität ≥ (gesprochen: größer oder gleich) 50 mPas aufweist.

Bei der strahlungshärtbaren, vorzugsweise UV-härtbaren, Zusammensetzung handelt es sich vorzugsweise um eine strahlungshärtbare, vorzugsweise UV-härtbare, Tintenzusammensetzung oder Lackzusammensetzung, insbesondere Klarlackzusammensetzung oder Überdrucklackzusammensetzung.

Unter dem Ausdruck "strahlungshärtbare, vorzugsweise UV-härtbare, Zusammensetzung" soll im Sinne der vorliegenden Erfindung eine Zusammensetzung verstanden werden, die unter Einwirkung von elektromagnetischer Strahlung, vorzugsweise ultravioletter Strahlung (UV-Strahlung), ausgehärtet werden kann.

Unter dem Ausdruck "strahlungshärtbare, vorzugsweise UV-härtbare, Tintenzusammensetzung" soll im Sinne der vorliegenden Erfindung eine Tintenzusammensetzung verstanden werden, die unter Einwirkung von elektromagnetischer Strahlung, vorzugsweise ultravioletter Strahlung (UV-Strahlung), ausgehärtet werden kann.

Unter dem Ausdruck "strahlungshärtbare, vorzugsweise UV-härtbare, Lackzusammensetzung, insbesondere Klarlackzusammensetzung oder Überdrucklackzusammensetzung" soll im Sinne der vorliegenden Erfindung eine Lackzusammensetzung, insbesondere Klarlackzusammensetzung oder Überdrucklackzusammensetzung, verstanden werden, die unter Einwirkung von elektromagnetischer Strahlung, vorzugsweise ultravioletter Strahlung (UV-Strahlung), ausgehärtet werden kann.

Unter dem Ausdruck "Tintenzusammensetzung" soll im Sinne der vorliegenden Erfindung eine gefärbte, insbesondere intensiv gefärbte, und färbende Zusammensetzung in flüssiger Form, insbesondere in Form einer Dispersion, Suspension oder Lösung, verstanden werden.

Unter dem Ausdruck "Lackzusammensetzung" soll im Sinne der vorliegenden Erfindung eine Beschichtungszusammensetzung verstanden werden, die, vorzugsweise dünn, auf Gegenstände aufgetragen wird und durch chemische und/oder physikalische Vorgänge, wie beispielsweise Verdampfen von Lösungsmitteln und anschließendes Auftrocknen, thermisch induzierte Härtung mittels chemischer Reaktionen oder lichtinduzierte Härtung mittels chemischer Reaktionen, insbesondere UV-lichtinduzierte photochemische Photopolymerisation, zu einem Film, insbesondere durchgehenden, festen Film, aufgebaut wird. Insbesondere kann eine Lackzusammensetzung im Sinne der vorliegenden Erfindung eine Beschichtungszusammensetzung sein, die elektromagnetische Strahlung absorbiert oder nicht absorbiert. Insbesondere kann eine Lackzusammensetzung im Sinne der vorliegenden Erfindung pigment- und/oder farbstofffrei, insbesondere farbmittelfrei, sein oder Farbmittel, insbesondere Pigmente und/oder Farbstoffe, aufweisen.

Unter dem Ausdruck "Klarlackzusammensetzung" soll im Sinne der vorliegenden Erfindung eine transparente, das heißt lichtdurchlässige, insbesondere eine für elektromagnetische Strahlung oder elektromagnetische Wellen mit einer Wellenlänge von 380 nm bis 780 nm durchlässige, Lackzusammensetzung verstanden werden.

Unter dem Ausdruck "Überdrucklackzusammensetzung" soll im Sinne der vorliegenden Erfindung eine Beschichtungszusammensetzung verstanden werden, welche auf ein Substrat aufgebracht wird und bestimmte mechanische und/oder optische Eigenschaften, insbesondere Oberflächenstrukturierungen, erzeugt. Insbesondere kann der Ausdruck "Überdrucklackzusammensetzung" eine Beschichtungszusammensetzung bedeuten, die Eigenschaften einer Klarlackzusammensetzung aufweist.

Unter dem Ausdruck "ultraviolette Strahlung (UV-Strahlung)" soll im Sinne der vorliegenden Erfindung vorzugsweise eine Strahlung in einem Wellenlängenbereich von 100 nm bis 450 nm, vorzugsweise 200 nm bis 450 nm, insbesondere 360 nm bis 450 nm, insbesondere 380 nm bis 450 nm, verstanden werden.

Unter dem Ausdruck "monofunktionelles Acrylat-Monomer" soll im Sinne der vorliegenden Erfindung ein Monomer verstanden werden, das nur eine Acrylatgruppe oder Acrylgruppe aufweist.

Unter dem Ausdruck "monofunktionelles Methacrylat-Monomer" soll im Sinne der vorliegenden Erfindung ein Monomer verstanden werden, das nur eine Methacrylatgruppe oder Methacrylgruppe aufweist.

Unter dem Ausdruck "multifunktionelles Acrylat-Monomer" soll im Sinne der vorliegenden Erfindung ein Monomer verstanden werden, dass eine Vielzahl von Acrylatgruppen oder Acrylgruppen, das heißt zwei oder mehr, beispielsweise drei, vier oder fünf, Acrylatgruppen oder Acrylgruppen, aufweist.

Unter dem Ausdruck "multifunktionelles Methacrylat-Monomer" soll im Sinne der vorliegenden Erfindung ein Monomer verstanden werden, dass eine Vielzahl von Methacrylatgruppen oder Methacrylgruppen, das heißt zwei oder mehr, beispielsweise drei, vier oder fünf, Methacrylatgruppen oder Methacrylgruppen, aufweist.

Unter dem Ausdruck "monofunktionelles Acrylamid-Monomer" soll im Sinne der vorliegenden Erfindung ein Monomer verstanden werden, dass nur eine Acrylamidgruppe aufweist.

Der Ausdruck "wenigstens ein monofunktionelles Acrylat-Monomer" kann im Sinne der vorliegenden Erfindung nur ein monofunktionelles Acrylat-Monomer, das heißt nur ein Typ eines monofunktionellen Acrylat-Monomers, oder eine Vielzahl von unterschiedlichen monofunktionellen Acrylat-Monomeren bzw. Acrylat-Monomertypen bedeuten.

Der Ausdruck "wenigstens ein monofunktionelles Methacrylat-Monomer" kann im Sinne der vorliegenden Erfindung nur ein monofunktionelles Methacrylat-Monomer, das heißt nur ein Typ eines monofunktionellen Methacrylat-Monomers, oder eine Vielzahl von unterschiedlichen monofunktionellen Methacrylat-Monomeren bzw. Methacrylat-Monomertypen bedeuten.

Der Ausdruck "wenigstens ein multifunktionelles Acrylat-Monomer" kann im Sinne der vorliegenden Erfindung nur ein multifunktionelles Acrylat-Monomer, das heißt nur ein Typ eines multifunktionellen Acrylat-Monomers, oder eine Vielzahl von unterschiedlichen multifunktionellen Acrylat-Monomeren bzw. Acrylat-Monomertypen bedeuten.

Der Ausdruck "wenigstens ein multifunktionelles Methacrylat-Monomer" kann im Sinne der vorliegenden Erfindung nur ein multifunktionelles Methacrylat-Monomer, das heißt nur ein Typ eines multifunktionellen Methacrylat-Monomers, oder eine Vielzahl von unterschiedlichen multifunktionellen Methacrylat-Monomeren bzw. Methacrylat-Monomertypen bedeuten.

Der Ausdruck "wenigstens ein monofunktionelles Acrylamid-Monomer" kann im Sinne der vorliegenden Erfindung nur ein monofunktionelles Acrylamid-Monomer, d.h. nur ein Typ eines monofunktionellen Acrylamid-Monomers, oder eine Vielzahl von unterschiedlichen monofunktionellen Acrylamid-Monomeren bzw. Acrylamid-Monomertypen bedeuten.

Der Ausdruck "wenigstens ein Oligomer" kann im Sinne der vorliegenden Erfindung nur ein Oligomer, das heißt nur ein Typ eines Oligomers, oder eine Vielzahl von unterschiedlichen Oligomeren bzw. Oligomertypen bedeuten.

Der Ausdruck "wenigstens ein Polymer" kann im Sinne der vorliegenden Erfindung nur ein Polymer, das heißt nur ein Typ eines Polymers, oder eine Vielzahl von unterschiedlichen Polymeren bzw. Polymertypen bedeuten.

Unter dem Ausdruck "reaktives Oligomer" soll im Sinne der vorliegenden Erfindung ein polymerisierbares oder polymerisierfähiges Oligomer verstanden werden, das insbesondere bei Einwirkung von elektromagnetischer Strahlung, vorzugsweise ultravioletter Strahlung (UV-Strahlung), insbesondere in Gegenwart eines Photoinitiators, zur Reaktion gebracht werden kann und insbesondere an Polymerisationsreaktionen, vorzugsweise radikalischen Polymerisationsreaktionen, und/oder Vernetzungsreaktionen unter teilweiser oder vollständiger Aushärtung der erfindungsgemäßen Zusammensetzung teilnehmen kann. Vorzugsweise handelt es sich bei dem "reaktiven Oligomer" im Sinne der vorliegenden Erfindung um ein bei Einwirkung von elektromagnetischer Strahlung, vorzugsweise ultravioletter Strahlung (UV-Strahlung), insbesondere in Gegenwart eines Photoinitiators, polymerisierbares oder polymerisierfähiges Oligomer. Alternativ oder zusätzlich kann das "reaktive Oligomer" zur Einstellung der Viskosität, insbesondere einer für eine digitale Verdruckbarkeit geeigneten Viskosität, der erfindungsgemäßen Zusammensetzung vorgesehen sein.

Unter dem Ausdruck "Viskosität" soll im Sinne der vorliegenden Erfindung vorzugsweise eine Scherviskosität verstanden werden. Hiermit ist der Widerstand der erfindungsgemäßen Zusammensetzung gegenüber Scherung gemeint. Die Viskosität wird vorzugsweise mit einem Viskosimeter, insbesondere gemäß EN ISO 3219, gemessen. Die Viskosität wird im Sinne der vorliegenden Erfindung mit Hilfe eines Rheometers, beispielsweise eines Rheometers mit der Bezeichnung "MCR 302" (Hersteller: Anton Paar), bei 40 °C bei einer Schergeschwindigkeit von 2000 s⁻¹ gemessen.

Die erfindungsgemäße Zusammensetzung hat aufgrund ihrer im Vergleich zu aus dem Stand der Technik bekannten Zusammensetzungen stark erhöhten Viskosität insbesondere den Vorteil, dass sie nach Aufbringen auf ein Substrat nicht oder nur wenig zu einem Verlaufen neigt. Dadurch ist eine verbesserte Druckqualität, insbesondere in Bezug auf Kantenschärfe und Auflösung, erzielbar. Obendrein ist ein Aufbringen einer geringeren Anzahl von Schichten ausreichend, um eine gewünschte Gesamtschichtdicke der erfindungsgemäßen Zusammensetzung, insbesondere nach ihrer Aushärtung, auf dem Substrat zu erreichen. Dies führt vorteilhafterweise auch zu einer Erhöhung der Druckgeschwindigkeit.

Die Erfindung basiert insbesondere auf dem überraschenden Befund, dass durch die Verwendung monofunktioneller Acrylat-Monomere und/oder monofunktioneller Methacrylat-Monomere die Rissbildung eines durch Aushärtung der erfindungsgemäßen Zusammensetzung auf einer Substratoberfläche gebildeten Films vermieden oder das Risiko einer solchen Rissbildung zumindest signifikant reduziert werden kann. Dies wiederum erhöht vorteilhafterweise die mechanische Beständigkeit und insbesondere Spülmaschinenfestigkeit der erfindungsgemäßen Zusammensetzung.

Ein weiterer überraschender Effekt der erfindungsgemäßen Zusammensetzung besteht darin, dass durch die Verwendung multifunktioneller Acrylat-Monomere und/oder multifunktioneller Methacrylat-Monomere die Beständigkeit der erfindungsgemäßen Zusammensetzung gegenüber Alkoholen, insbesondere Ethanol, signifikant erhöht werden kann. Dies ist besonders vorteilhaft im Hinblick auf zu beschichtende, insbesondere zu bedruckende, Substrate, wie beispielsweise Flaschen und/oder Trinkgläser, die bei ihrem bestimmungsgemäßen Gebrauch mit Alkoholen, insbesondere Ethanol, in Kontakt kommen.

Die strahlungshärtbare, vorzugsweise UV-härtbare, Zusammensetzung weist bei 40°C eine Viskosität von 50 mPas bis 150 mPas, insbesondere 50 mPas bis 125 mPas, vorzugsweise 50 mPas bis 100 mPas, auf. Durch die in diesem Absatz offenbarten Werte für die Viskosität der erfindungsgemäßen Zusammensetzung kommen die oben genannten erfindungsgemäßen Vorteile besonders stark zur Geltung.

In weiterer Ausgestaltung der Erfindung ist das wenigstens eine monofunktionelle Acrylat-Monomer und/oder wenigstens eine monofunktionelle Methacrylat-Monomer ausgewählt aus der Gruppe bestehend aus 2-Phenoxyethylacrylat, Isobornylacrylat, n-Octyldecylacrylat, Cyclic-trimethylol-propanformalacrylat, Laurylacrylat, alkoxyliertes Laurylacrylat wie ethoxyliertes Laurylacrylat, Isodecylacrylat, Caprolactonacrylat, 3,3,5-Trimethylcyclohexylacrylat, 4-Hydroxybutylacrylat, Isooctylacrylat, 2-(2-Ethoxyethoxy)ethylacrylat, Butylacrylat, Benzylacrylat, 2-(1,1-Dimethylethyl)cyclohexylacrylat, 3-(1,1-Dimethylethyl)cyclohexylacrylat, 4-(1,1-Dimethylethyl)cyclohexylacrylat, ethoxyliertes Phenylacrylat, alkoxyliertes Nonylphenolacrylat, O-phenylphenoxyethylacrylat, Phenoxybenzylacrylat, Trimethylcyclohexylacrylat, Tridecylacrylat, 4-tert-Butylcyclohexylacrylat, Behenylacrylat, Stearylacrylat, Isobornylmethacrylat, 4-tert.-Butylcyclohexylmethacrylat, Laurylmethacrylat, Isodecylmethacrylat, 2-Phenoxyethylmethacrylat, Isooctylmethacrylat, Benzylmethacrylat, Cyclohexylmethacrylat, 3,3,5-Trimethylcyclohexylmethacrylat, alkoxyliertes Nonylphenolmethacrylat, Hydroxyethylmethacrylat, 2-N-Morpholinoethylmethacrylat und Mischungen von wenigstens zwei der vorgenannten monofunktionellen Acrylat-Monomere und/oder monofunktionellen Methacrylat-Monomere.

Weiter kann die strahlungshärtbare, vorzugsweise UV-härtbare, Zusammensetzung einen Anteil des wenigstens einen monofunktionellen Acrylat-Monomers und/oder wenigstens einen monofunktionellen Methacrylat-Monomers, bezogen auf das Gesamtgewicht der strahlungshärtbaren, vorzugsweise UV-härtbaren, Zusammensetzung, aufweisen, der höher ist als ein Anteil des wenigstens einen multifunktionellen Acrylat-Monomers und/oder wenigstens einen multifunktionellen Methacrylat-Monomers, bezogen auf das Gesamtgewicht der strahlungshärtbaren, vorzugsweise UV-härtbaren, Zusammensetzung.

In weiterer Ausgestaltung der Erfindung weist das wenigstens eine monofunktionelle Acrylat-Monomer und/oder wenigstens eine monofunktionelle Methacrylat-Monomer und/oder wenigstens eine monofunktionelle Acrylamid-Monomer, insbesondere zusammen, einen Anteil von 20 Gew.-% bis 80 Gew.-%, insbesondere 30 Gew.-% bis 70 Gew.-%, vorzugsweise 40 Gew.-% bis 60 Gew.-%, auf, bezogen auf das Gesamtgewicht der strahlungshärtbaren, vorzugsweise UV-härtbaren, Zusammensetzung.

In weiterer Ausgestaltung der Erfindung ist das wenigstens eine multifunktionelle Acrylat-Monomer und/oder wenigstens eine multifunktionelle Methacrylat-Monomer ausgewählt aus der Gruppe bestehend aus (Octahydro-4,7-methano-1H-indendiyl)bis(methylen)diacrylat, Tricyclodecandimethanoldiacrylat, Butandioldiacrylat, 1,2-Ethylenglykoldiacrylat, 1,12-Dodecanoldiacrylat, 1,10-Decandioldiacrylat, Esterdioldiacrylat, propoxyliertes 2-Neopentylglycoldiacrylat, Tris-(2-Hydroxyethyl)-isocyanurattriacrylat, propoxyliertes Neopentylglykoldiacrylat, Hexandioldiacrylat, Tripropylenglykoldiacrylat, Tetraethylenglykoldiacrylat, Dipropylenglykoldiacrylat, alkoxyliertes Hexandioldiacrylat, 3-Methyl-1,5-pentandioldiacrylat, alkoxyliertes Cyclohexandimethanoldiacrylat, Tricyclodecandimethanoldiacrylat, Trimethylolpropantriacrylat, alkoxyliertes Trimethylolpropantriacrylat, ethoxyliertes Trimethylolpropantriacrylat, Glycerolpropoxylattriacrylat, Pentaerythritoltriacrylat, Dipentaerythritolpentaacrylat, Dipentaerythritolhexaacrylat, ethoxyliertes Pentaerythritoltetraacrylat, Pentaerythritoltetraacrylat, Ditrimethylolpropantetraacrylat, Polyethylenglycoldiacrylate, 1,2-Ethylenglykoldimethacrylat, 1,12-Dodecanoldimethacrylat, Tris-(2-hydroxyethyl)-isocyanurattrimethacrylat, Hexandioldimethacrylat, ethoxyliertes Bisphenol-A-dimethacrylat, Trimethylolpropantrimethacrylat, Pentaerythritoltetramethacrylat und Mischungen von wenigstens zwei der vorgenannten multifunktionellen Acrylat-Monomere und/oder multifunktionellen Methacrylat-Monomere.

In weiterer Ausgestaltung der Erfindung weist das wenigstens eine multifunktionelle Acrylat-Monomer und/oder wenigstens eine multifunktionelle Methacrylat-Monomer, insbesondere zusammen, einen Anteil von 5 Gew.-% bis 40 Gew.-%, insbesondere 5 Gew.-% bis 30 Gew.-%, vorzugsweise 5 Gew.-% bis 25 Gew.-%, auf, bezogen auf das Gesamtgewicht der strahlungshärtbaren, vorzugsweise UV-härtbaren, Zusammensetzung.

Bevorzugt weisen das wenigstens eine monofunktionelle Acrylat-Monomer und/oder wenigstens eine monofunktionelle Methacrylat-Monomer und/oder wenigstens eine monofunktionelle Acrylamid-Monomer und das wenigstens eine multifunktionelle Acrylat-Monomer und/oder wenigstens eine multifunktionelle Methacrylat-Monomer zusammen einen Anteil von 40 Gew.-% bis 90 Gew.-%, insbesondere 50 Gew.-% bis 80 Gew.-%, vorzugsweise 60 Gew.-% bis 70 Gew.-%, auf, bezogen auf das Gesamtgewicht der strahlungshärtbaren, vorzugsweise UV-härtbaren, Zusammensetzung.

In weiterer Ausgestaltung der Erfindung handelt es sich bei dem monofunktionellen Acrylamid-Monomer um 4-Acryloylmorpholin (ACMO).

In weiterer Ausgestaltung der Erfindung weist die strahlungshärtbare, vorzugsweise UV-härtbare, Zusammensetzung ferner wenigstens ein N-Vinylamid-Monomer und/oder wenigstens ein Vinylacrylat-Monomer, insbesondere ausgewählt aus der Gruppe bestehend aus N-Vinylcaprolactam, N-Vinylpyrrolidon, Vinylmethyloxazolidinon (VMOX), 2-(2-Vinyloxyethoxy)ethylacrylat (VEEA), 2-(2-Vinyloxyethoxy)ethylmethacrylat und Mischungen von wenigstens zwei der vorgenannten Monomeren, auf.

In weiterer Ausgestaltung der Erfindung weist das wenigstens eine Oligomer bei 40°C eine Viskosität von 2000 mPas bis 20000 mPas, insbesondere 3000 mPas bis 15000 mPas, vorzugsweise 4000 mPas bis 10000 mPas, auf. Ein solches Oligomer kann im Sinne der vorliegenden Erfindung auch als hochviskoses Oligomer bezeichnet werden. Durch die Verwendung eines solchen Oligomers kann das Risiko eines Verlaufens der erfindungsgemäßen Zusammensetzung nach ihrem Aufbringen auf ein Substrat (zusätzlich) minimiert werden.

In weiterer Ausgestaltung der Erfindung weist das wenigstens eine Oligomer einen Anteil von 10 Gew.-% bis 50 Gew.-%, insbesondere 20 Gew.-% bis 50 Gew.-%, vorzugsweise 20 Gew.-% bis 40 Gew.-%, auf, bezogen auf das Gesamtgewicht der strahlungshärtbaren, vorzugsweise UV-härtbaren, Zusammensetzung. Der in Bezug auf die vorherige Ausgestaltung der Erfindung beschriebene Vorteil gilt sinngemäß.

Das wenigstens eine Oligomer weist vorzugsweise ein Molekulargewicht, insbesondere gewichtsmittleres Molekulargewicht, von 500 Da bis 10000 Da, insbesondere 1500 Da bis 8000 Da, vorzugsweise 2500 Da bis 5500 Da, auf. Das Molekulargewicht, insbesondere gewichtsmittlere Molekulargewicht, ist vorzugsweise mittels Gel-Permeations-Chromatographie, insbesondere mit Polystyrol als Standard, bestimmt.

In weiterer Ausgestaltung der Erfindung handelt es sich bei dem wenigstens einen Oligomer um wenigstens ein reaktives Oligomer, insbesondere wenigstens ein Acrylat-Oligomer und/oder wenigstens ein Methacrylat-Oligomer.

Der Ausdruck "wenigstens ein reaktives Oligomer" kann im Sinne der vorliegenden Erfindung nur ein reaktives Oligomer, das heißt nur ein Typ eines reaktiven Oligomers, oder eine Vielzahl von unterschiedlichen reaktiven Oligomeren bzw. Oligomertypen bedeuten. Dementsprechend kann der Ausdruck "wenigstens ein Acrylat-Oligomer" im Sinne der vorliegenden Erfindung nur ein Acrylat-Oligomer, das heißt nur ein Typ eines Acrylat-Oligomers, oder eine Vielzahl von unterschiedlichen Acrylat-Oligomeren bzw. Acrylat-Oligomertypen bedeuten. Dementsprechend kann der Ausdruck "wenigstens ein Methacrylat-Oligomer" im Sinne der vorliegenden Erfindung nur ein Methacrylat-Oligomer, das heißt nur ein Typ eines Methacrylat-Oligomers, oder eine Vielzahl von unterschiedlichen Methacrylat-Oligomeren bzw. Methacrylat-Oligomertypen bedeuten.

Weiter kann die strahlungshärtbare, vorzugsweise UV-härtbare, Zusammensetzung abgesehen von dem wenigstens einen Acrylat-Oligomer und/oder dem wenigstens einen Methacrylat-Oligomer kein weiteres reaktives Oligomer aufweisen.

Unter dem Ausdruck "Acrylat-Oligomer" soll im Sinne der vorliegenden Erfindung ein Oligomer mit mindestens einer Acrylgruppe, d.h. nur einer Acrylgruppe (sogenanntes monofunktionelles Acrylat-Oligomer) oder einer Vielzahl von Acrylgruppen (sogenanntes multifunktionelles Acrylat-Oligomer), verstanden werden.

Unter dem Ausdruck "Methacrylat-Oligomer" soll im Sinne der vorliegenden Erfindung ein Oligomer mit wenigstens einer Methacrylgruppe, das heißt nur einer Methacrylgruppe (sogenanntes monofunktionelles Methacrylat-Oligomer) oder einer Vielzahl von Methacrylgruppen (sogenanntes multifunktionelles Methacrylat-Oligomer), verstanden werden.

Vorzugsweise ist das wenigstens eine Oligomer, insbesondere wenigstens ein reaktive Oligomer, vorzugsweise wenigstens eine Acrylat-Oligomer und/oder wenigstens eine Methacrylat-Oligomer, ausgewählt aus der Gruppe bestehend aus Epoxyacrylate, Polyesteracrylate, aliphatische Urethanacrylate, aromatische Urethanacrylate, Polyetheracrylate, Silikonacrylate, Melaminacrylate, dendritische Acrylate, aminmodifizierte Acrylate, Epoxymethacrylate, Polyestermethacrylate, aliphatische Urethanmethacrylate, aromatische Urethanmethacrylate, Polyethermethacrylate, Silikonmethacrylate, Melaminmethacrylate, dendritische Methacrylate, aminmodifizierte Methacrylate und Mischungen von wenigstens zwei der vorgenannten Oligomere, insbesondere reaktiven Oligomere, vorzugsweise Acrylat-Oligomere und/oder Methacrylat-Oligomere.

Beispielsweise kann das wenigstens eine Oligomer, insbesondere wenigstens eine reaktive Oligomer, vorzugsweise wenigstens eine Acrylat-Oligomer und/oder wenigstens eine Methacrylat-Oligomer, ausgewählt sein aus der Gruppe bestehend aus Urethanacrylat, Methoxypolyethylenglykolmonoacrylat, Polyethylenglykoldiacrylat, aminmodifizierte Polyetheracrylate, Urethanmethacrylat, Methoxypolyethylenglykolmonomethacrylat, Polyethylenglykoldimethacrylat, aminmodifizierte Polyethermethacrylate und Mischungen von wenigstens zwei der vorgenannten Oligomere, insbesondere reaktiven Oligomere, vorzugsweise Acrylat-Oligomere und/oder Methacrylat-Oligomere.

In weiterer Ausgestaltung der Erfindung weist die strahlungshärtbare, vorzugsweise UV-härtbare, Zusammensetzung einen Anteil des wenigstens einen monofunktionellen Acrylat-Monomers und/oder wenigstens einen monofunktionellen Methacrylat-Monomers und/oder wenigstens einen monofunktionellen Acrylamid-Monomers und des wenigstens einen multifunktionellen Acrylat-Monomers und/oder wenigstens einen multifunktionellen Methacrylat-Monomers zu dem wenigstens einen Oligomer von < (gesprochen: kleiner) 4:1, insbesondere 1,5 : 1 zu 3,5 : 1, vorzugsweise 2 : 1 zu 3,5 : 1, auf. Durch die in diesem Absatz offenbarten Anteile ist vorteilhafterweise eine Viskosität und mithin ein Druckverhalten, insbesondere beim Tintenstrahldruckverfahren, erzielbar, die bzw. das beim Aufbringen der erfindungsgemäßen Zusammensetzung auf ein Substrat zu einer besonders optimierten Randschärfe der aufgebrachten Schichten führt.

In weiterer Ausgestaltung der Erfindung besitzt das wenigstens eine Polymer ein Molekulargewicht, insbesondere gewichtsmittleres Molekulargewicht, von ≥ (gesprochen: größer gleich) 30000 Da, insbesondere 30000 Da bis 100000 Da, bevorzugt 40000 Da bis 70000 Da. Das Molekulargewicht, insbesondere gewichtsmittlere Molekulargewicht, ist vorzugsweise mittels Gel-Permeations-Chromatographie, insbesondere mit Polystyrol als Standard, bestimmt.

In weiterer Ausgestaltung der Erfindung weist das wenigstens eine Polymer eine Glasübergangstemperatur von 25°C bis 105°C, insbesondere 25°C bis 90°C, bevorzugt 40°C bis 90°C, besonders bevorzugt 40°C bis 80°C, auf.

In weiterer Ausgestaltung der Erfindung weist das wenigstens eine Polymer einen Anteil von 10 Gew.-% bis 50 Gew.-%, insbesondere 20 Gew.-% bis 50 Gew.-%, vorzugsweise 20 Gew.-% bis 40 Gew.-%, auf, bezogen auf das Gesamtgewicht der strahlungshärtbaren, vorzugsweise UV-härtbaren, Zusammensetzung. Der in Bezug auf die vorherige Ausgestaltung der Erfindung beschriebene Vorteil gilt sinngemäß.

Weiter können das wenigstens eine Oligomer und das wenigstens eine Polymer zusammen einen Anteil von 10 Gew.-% bis 50 Gew.-%, insbesondere 20 Gew.-% bis 50 Gew.-%, vorzugsweise 20 Gew.-% bis 40 Gew.-%, aufweisen, bezogen auf das Gesamtgewicht der strahlungshärtbaren, vorzugsweise UV-härtbaren, Zusammensetzung.

In weiterer Ausgestaltung der Erfindung handelt es sich bei dem wenigstens einen Polymer um wenigstens ein passives, das heißt nicht strahlungshärtbares, vorzugsweise nicht UV-härtbares, Polymer, und/oder wenigstens ein aktives, das heißt strahlungshärtbares, vorzugsweise UV-härtbares, Polymer. Vorzugsweise handelt es sich bei dem wenigstens einen Polymer um wenigstens ein Harz, insbesondere wenigstens ein Festharz, d.h. nur ein Harz, insbesondere Festharz, oder eine Vielzahl von unterschiedlichen Harzen, insbesondere Festharzen.

Unter dem Ausdruck "Harz" sollen im Sinne der vorliegenden Erfindung flüssige oder feste organische Polymere, insbesondere als Grundstoffe für Kunststoffe, verstanden werden.

Der Ausdruck "wenigstens ein Harz" kann im Sinne der vorliegenden Erfindung nur ein Harz, das heißt nur ein Typ eines Harzes, oder eine Vielzahl von unterschiedlichen Harzen bzw. Harztypen bedeuten.

Unter dem Ausdruck "Festharz" sollen im Sinne der vorliegenden Erfindung bei Raumtemperatur, insbesondere bei einer Temperatur von 15 °C bis 25 °C, feste, d.h. nicht flüssige, organische Polymere verstanden werden.

Der Ausdruck "wenigstens ein Festharz" kann im Sinne der vorliegenden Erfindung nur ein Festharz, das heißt nur ein Typ eines Festharzes, oder eine Vielzahl von unterschiedlichen Festharzen bzw. Festharztypen bedeuten.

Weiter kann die strahlungshärtbare, vorzugsweise UV-härtbare, Zusammensetzung abgesehen von dem wenigstens einen passiven, das heißt nicht strahlungshärtbaren, vorzugsweise nicht UV-härtbaren, Polymer und/oder dem wenigstens einen aktiven, das heißt strahlungshärtbaren, vorzugsweise UV-härtbaren, Polymer kein weiteres Polymer aufweisen.

Bevorzugt kann es sich bei dem wenigstens einen Polymer um wenigstens ein passives Harz, insbesondere passives Festharz, handeln, das vorzugsweise ausgewählt ist aus der Gruppe bestehend aus Epoxy-Harz, Polyester-Harz, Vinyl-Harz, Keton-Harz, Aldehyd-Harz, Nitrocellulose-Harz, Phenoxy-Harz, Acrylat-Harz und Mischungen von wenigstens zwei der vorgenannten Harze.

Weiter kann die strahlungshärtbare, vorzugsweise UV-härtbare, Zusammensetzung wenigstens einen Photoinitiator, insbesondere vom Norrish Typ I und/oder vom Norrish Typ II, aufweisen.

Der Ausdruck "wenigstens ein Photoinitiator" kann im Sinne der vorliegenden Erfindung nur einen Photoinitiator, das heißt nur einen Typ eines Photoinitiators, oder eine Vielzahl von unterschiedlichen Photoinitiatoren bzw. Photoinitiatortypen bedeuten.

Unter dem Ausdruck "Photoinitiator vom Norrish Typ I" soll im Sinne der vorliegenden Erfindung ein Photoinitiator verstanden werden, der bei Einwirkung von elektromagnetischer Strahlung, vorzugsweise ultravioletter Strahlung (UV-Strahlung), in zwei Radikale zerfällt, meist durch eine sogenannte Alpha-Spaltung. Die gebildeten Radikale können eine Kettenpolymerisation und/oder Vernetzung unter teilweiser oder vollständiger Aushärtung der strahlungshärtbaren, vorzugsweise UV-härtbaren, Zusammensetzung auslösen.

Unter dem Ausdruck "Photoinitiator vom Norrish Typ II" soll im Sinne der vorliegenden Erfindung ein Photoinitiator verstanden werden, der in der Lage ist, ein Wasserstoffatom von einem benachbarten Molekül zu abstrahieren. Dieses kann dann eine Kettenpolymerisation und/oder Vernetzung unter teilweiser oder vollständiger Aushärtung der strahlungshärtbaren, vorzugsweise UV-härtbaren, Zusammensetzung auslösen.

Der wenigstens eine Photoinitiator kann insbesondere ausgewählt sein aus der Gruppe bestehend aus Ethyl-(2,4,6-Trimethylbenzoyl)phenylphosphinat, Isobutyldibenzoylphosphinoxid, Diphenyl-(2,4,6-trimethylbenzoyl)-phosphinoxid, 1-Methyl-(2,6-dimethoxybenzoyl)phenylphosphinoxid, Methylisobutyrylmethyl-phosphinat, Isopropylpivaloylphenylphosphinat, Methyl-p-toluoylphenylphosphinat, Methyl-o-toluoylphenylphosphinat, Isopropyl-p-tert-butylbenzoylphenylphosphinat, Methylacryloylphenylphosphinat, o-Toluoylphenylphosphinoxid, Vinyl-pivaloylphenylphosphinat, Methyl-pivaloylphenylphosphinat, Isopropyl-pivaloylphenylphosphinat, Bis(2,6-dichlorobenzoyl)phenylphosphinoxid, Bis(2,6-dichlorobenzoyl)-2,5-dimethylphenylphosphinoxid, Bis(2,6-dichlorobenzoyl)-4-ethoxy-phenylphosphinoxid, Bis(2,6-dichlorobenzoyl)-4-propylphenylphosphinoxid, Bis(2,6-dichloro-benzoyl)-2-naphtylphosphinoxid, Bis(2,6-dichlorobenzoyl)-1-naphtylphosphinoxid, Bis(2,6- dichlorobenzoyl)-4-chlorophenylphosphinoxid, Bis(2,6-dichlorobenzoyl)-2,4-dimethoxyphenylphosphinoxid, Bis(2,6-dichlorobenzoyl)ethylphosphinoxid, Bis(2,6- dichlorobenzoyl)-4-octylphenylphosphinoxid, Bis(2,4,6-trimethylbenzoyl)phenylphosphinoxid, Bis(2,4,6-trimethylbenzoyl)-2,5-dimethylphenylphosphinoxid, Bis(2,6-dichloro-3,4,5-trimethoxybenzoyl)-2,5-dimethylphenylphosphinoxid, Bis(2,6-dichloro-3,4,5-trimethoxybenzoyl)-4-ethoxyphenylphosphinoxid, Bis(2-methyl-1-naphthyl)-2,5-dimethylphenylphospinoxid, Bis(2-methyl-1-naphthyl)-4-ethoxyphenylphosphinoxid, Bis(2-methyl-1-naphthyl)-2-naphthylphosphinoxid, Bis(2-methyl-1-naphthyl)-4-propylphenylphosphinoxid, Bis(2-methyl-1-naphthyl)-2,5-trimethylphenylphosphinoxid, Bis(2-methoxy-1-naphthyl)-4-ethoxyphenylphosphinoxid, Bis(2-chloro-1-naphthyl)-2,5-dimethylphenylphosphinoxid, Bis(2,6-dimethoxybenzoyl)-2,4,6-trimethylpentylphosphinoxid und Mischungen von wenigstens zwei der vorgenannten Photoinitiatoren.

Alternativ oder in Kombination kann es sich bei dem wenigstens einen Photoinitiator um eine Verbindung mit nachfolgender Formel I handeln: 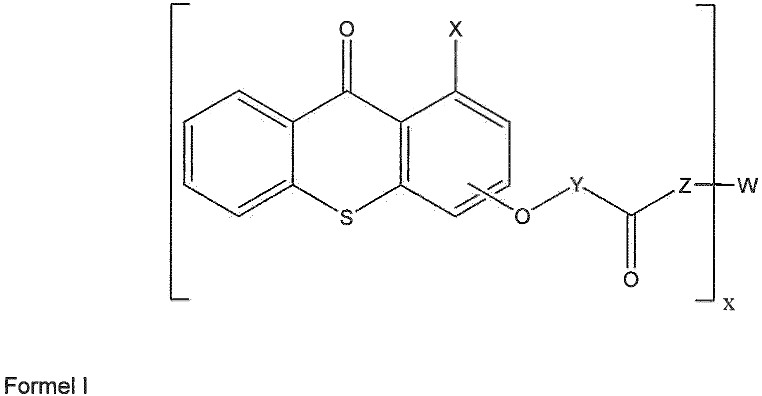 wobei
- X ein Halogenatom bedeutet,
- Y eine Alkylen- oder Alkenylengruppe bedeutet,
- Z eine Gruppe der Formel -[OCH₂CH₂]_{y}-, -[OCH₂CH₂CH₂CH₂]_{y}- oder -[OCH(CH₃)CH₂]_{y}-, wobei y eine Zahl, insbesondere eine ganze Zahl, von 1 bis 20, insbesondere 1 bis 10, bedeutet, oder Z eine Gruppe der Formel -[O(CH₂)_{b}CO]_{y}- oder -[O(CH₂)_{b}CO]_{(y-1)}-[O(CHR"CHR')ₐ]- bedeutet, wobei b eine Zahl, insbesondere eine ganze Zahl, von 4 bis 5 und y eine Zahl, insbesondere eine ganze Zahl, von 1 bis 20, insbesondere 1 bis 10, bedeutet,
- W einen Rest einer Polyhydroxyverbindung bedeutet und
- x eine Zahl, insbesondere eine ganze Zahl, von > (gesprochen: größer) 1 bedeutet, wobei an die Gruppe W gebundene Gruppierungen gleich oder voneinander verschieden sein können.

Bevorzugt bedeutet X in der Formel I ein Chloratom. Alternativ kann X in der Formel I ein Fluor-, Brom- oder lodatom bedeuten. Ferner kann Y in der Formel I eine Alkylen- oder Alkenylengruppe mit einem Kohlenstoffatom bis zwölf Kohlenstoffatomen, insbesondere einem Kohlenstoffatom bis zehn Kohlenstoffatomen, vorzugsweise einem Kohlenstoffatom bis sechs Kohlenstoffatomen, bedeuten. Bevorzugt bedeutet Y in der Formel I eine Methylengruppe, d.h. eine -CH₂-Gruppe. Weiter bevorzugt bedeutet Z in der Formel I eine Gruppe -[OCH(CH₃)CH₂]_{y}-, wobei y eine Zahl, insbesondere eine ganze Zahl, von 1 bis 20, insbesondere 1 bis 10, bedeutet. Ferner bedeutet W in der Formel I vorzugsweise einen Rest von Pentaerythrit, d.h. einen Rest von 2,2-Bis(hydroxymethyl)-1,3-propandiol. Alternativ kann W in der Formel I einen Rest von Ethylenglykol, Propylenglykol, Butylenglykol, Glycerin, Trimethylolpropan, Ditrimethylolpropan oder Dipentaerythrit bedeuten. Bevorzugt ist die Gruppierung -YCO-Z- in der wenigstens einen Photoinitiatorverbindung der Formel I in einer para-Position relativ zur Position von X an die Thioxanthongruppierung gebunden.

Insbesondere kann der wenigstens eine Photoinitiator die nachfolgende Formel la besitzen:

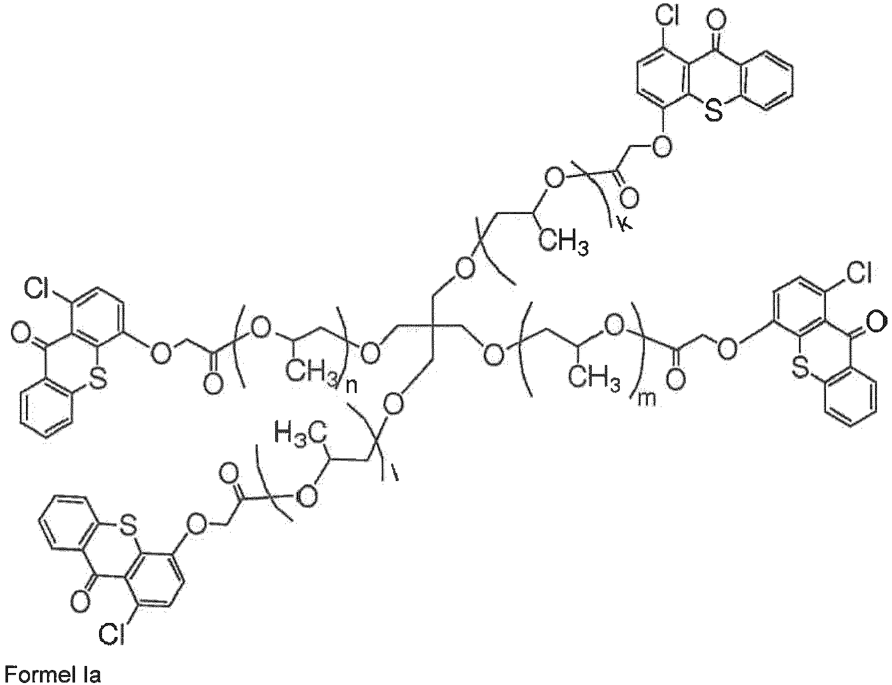

Weiter kann die strahlungshärtbare, vorzugsweise UV-härtbare, Zusammensetzung wenigstens ein Pigment, insbesondere wenigstens ein Farbpigment und/oder wenigstens ein Effektpigment, aufweisen.

Der Ausdruck "wenigstens ein Pigment, insbesondere wenigstens ein Farbpigment und/oder wenigstens ein Effektpigment" kann im Sinne der vorliegenden Erfindung nur ein Pigment, das heißt nur ein Typ eines Pigments, insbesondere Farb- und/oder Effektpigments, oder eine Vielzahl von unterschiedlichen Pigmenten bzw. Pigmenttypen, insbesondere Farb- und/oder Effektpigmenten bzw. Farb- und/oder Effektpigmenttypen, bedeuten.

Das wenigstens eine Farbpigment kann ausgewählt sein aus der Gruppe bestehend aus anorganische Pigmente, organische Pigmente, Hohlkugel-Pigmente, wie beispielsweise polymere Hohlkugel-Pigmente, Aluminium-Pigmente, wie beispielsweise beschichtete Aluminium-Pigmente, und Mischungen von wenigstens zwei der vorgenannten Pigmente.

Die anorganischen Pigmente können insbesondere ausgewählt sein aus der Gruppe bestehend aus Titandioxid, Ruß, Bismutpigmente, Oxide, Hydroxide, Eisencyanblau, Ultramarin, Molybdate, Eisenoxidpigmente, Chromoxid, Mischphasenoxidpigmente, wie beispielsweise Rinmans Grün, und Mischungen von wenigstens zwei der vorgenannten anorganischen Pigmente.

Die organischen Pigmente können insbesondere ausgewählt sein aus der Gruppe bestehend aus Pigmente auf Basis von Quinacridonen, Pigmente auf Basis von Isoindolinen, Pigmente auf Basis von Phthalocyaninen, Pigmente auf Basis von Benzimidazalonen, Azopigmente, Monoazopigmente, Diazopigmente, polyzyklische Pigmente und Mischungen von wenigstens zwei der vorgenannten organischen Pigmente.

Die beschichteten Aluminium-Pigmente können beispielsweise eine phosphorhaltige und insbesondere fluorverbindungsfreie Beschichtung aufweisen. Durch die Verwendung von beschichteten Aluminium-Pigmenten kann der strahlungshärtbaren, vorzugsweise UV-härtbaren, Zusammensetzung vorteilhafterweise ein Metallic-Effekt verliehen werden.

Unter dem Ausdruck "Effektpigment" soll im Sinne der vorliegenden Erfindung ein Pigment verstanden werden, das einem System, in dem es eingebettet ist, zusätzliche Eigenschaften, wie beispielsweise winkelabhängige Farbton- und/oder Glanzänderungen (Flop-Effekt) und/oder Textur, verleiht.

Bei dem wenigstens einen Effektpigment kann es sich insbesondere um wenigstens ein Perlglanzpigment und/oder wenigstens ein Interferenzpigment, insbesondere ausgewählt aus der Gruppe bestehend aus Fischsilber, basisches Bleicarbonat, Bismutoxidchlorid, plättchenförmiges Eisenoxidrot, plättchenförmiges Titandioxid, plättchenförmige organische Pigmente, Metalloxid-Glimmerpigmente, Aluminiumoxid-Flakes, Borosilikat-Flakes, Siliciumdioxid-Flakes, metalloxidbeschichtete Metallplättchen, Multischichtpigmente (Fabry-Perot-Struktur), Flüssigkristallpigmente, strukturierte Effektpigmente und Mischungen von wenigstens zwei der vorgenannten Pigmente handeln.

Weiter kann das wenigstens eine Pigment einen Anteil von 0,1 Gew.-% bis 50 Gew.-%, insbesondere 0,1 Gew.-% bis 30 Gew.-%, vorzugsweise 0,1 Gew.-% bis 20 Gew.-%, aufweisen, bezogen auf das Gesamtgewicht der strahlungshärtbaren, vorzugsweise UV-härtbaren, Zusammensetzung.

Weiter kann die strahlungshärtbare, vorzugsweise UV-härtbare, Zusammensetzung frei von einem Pigment, insbesondere bunten und/oder unbunten Pigment, und/oder frei von einem Farbstoff, insbesondere bunten und/oder unbunten Farbstoff, sein.

Weiter kann die strahlungshärtbare, vorzugsweise UV-härtbare, Zusammensetzung frei von Wasser und/oder einem organischen Lösungsmittel sein. Insbesondere kann die strahlungshärtbare, vorzugsweise UV-härtbare, Zusammensetzung abgesehen von dem wenigstens einen monofunktionellen Acrylat-Monomer und/oder wenigstens einen monofunktionellen Methacrylat-Monomer und/oder wenigstens einen monofunktionellen Acrylamid-Monomer und dem wenigstens einen multifunktionellen Acrylat-Monomer und/oder wenigstens einen multifunktionellen Methacrylat-Monomer lösungsmittelfrei sein.

Bevorzugt kann die strahlungshärtbare, vorzugsweise UV-härtbare, Zusammensetzung zum Beschichten, insbesondere Bedrucken, bevorzugt Digitalbedrucken, besonders bevorzugt Tintenstrahlbedrucken, von Substraten (Bedruckstoffen oder Druckträgern), insbesondere aus Glas, Kunststoff, Papier, Karton, Keramik, Metall oder einer Kombination aus wenigstens zwei der vorgenannten Materialien, verwendet werden. Die Substrate können insbesondere in Form von Flaschen, Gläsern wie Trinkgläsern, Werbetafeln, Spielzeugen, Bannern, Folien, Blechen, Textilien, Verpackungen wie Lebensmittelverpackungen, Möbeln, Glasscheiben oder Fußböden gestaltet sein.

Ferner kann die strahlungshärtbare, vorzugsweise UV-härtbare, Zusammensetzung zum Beschichten von Griffzonen, zum Herstellen von Antirutschbeschichtungen, für optische Anwendungen und Effekte, zum Erzeugen einer Blindenschrift, für die Photovoltaik oder für Positionierungshilfen verwendet werden.

Gemäß einem zweiten Aspekt betrifft die Erfindung ein Verfahren zum Beschichten, insbesondere Bedrucken, bevorzugt Digitalbedrucken, besonders bevorzugt Tintenstrahlbedrucken, eines Substrats, das heißt eines Bedruckstoffes oder Druckträgers. Das Verfahren umfasst nachfolgende Schritte:
a) Aufbringen, insbesondere schichtförmiges Aufbringen, einer strahlungshärtbaren, vorzugsweise UV-härtbaren, Zusammensetzung, insbesondere gemäß erstem Erfindungsaspekt, auf eine Oberfläche des Substrats und
b) Härten der aufgebrachten, insbesondere schichtförmig aufgebrachten, strahlungshärtbaren, vorzugsweise UV-härtbaren, Zusammensetzung durch Einwirkung elektromagnetischer Strahlung, insbesondere von UV-Strahlung.

Die strahlungshärtbare, vorzugsweise UV-härtbare, Zusammensetzung kann grundsätzlich nur selektiv oder teilweise, das heißt nur bereichs- oder abschnittsweise, oder vollständig, das heißt vollflächig oder durchgehend, auf die Oberfläche des Substrats aufgebracht werden.

Beim Durchführen von Schritt a) kann nur eine Schicht oder eine Vielzahl von Schichten der strahlungshärtbaren, vorzugsweise UV-härtbaren, Zusammensetzung auf die Oberfläche des Substrats aufgebracht werden.

Weiter können/kann der Schritt a) und/oder der Schritt b) mehrmals, insbesondere 1 mal bis 25 mal, bevorzugt 4 mal bis 15 mal, durchgeführt werden.

Im Falle eines mehrschichtigen Aufbringens der strahlungshärtbaren, vorzugsweise UV-härtbaren, Zusammensetzung auf die Oberfläche des Substrats, kann die strahlungshärtbare, vorzugsweise UV-härtbare, Zusammensetzung nach Aufbringen einer jeden einzelnen Schicht oder nach einem vollständigem Aufbringen, das heißt nach Aufbringen aller Schichten, der strahlungshärtbaren, vorzugsweise UV-härtbaren, Zusammensetzung auf die Oberfläche des Substrats gehärtet werden.

Weiter kann zum Durchführen von Schritt b) eine Quecksilberdampflampe oder eine UV-Leuchtdiode (UV-LED) verwendet werden. Mithilfe der Quecksilberdampflampe wird vorzugsweise eine UV-Strahlung in einem Wellenlängenbereich von 200 nm bis 450 nm erzeugt. Mithilfe der UV-Leuchtdiode wird vorzugsweise eine UV-Strahlung in einem Wellenlängenbereich von 360 nm bis 450 nm erzeugt.

Weiter können einzelne Schichten der aufgebrachten, strahlungshärtbaren, vorzugsweise UV-härtbaren, Zusammensetzung, insbesondere mit der UV-Leuchtdiode, nicht vollständig gehärtet werden, sondern es kann zunächst nur ein UV-Pinning der einzelnen Schichten erfolgen. Beim UV-Pinning wird eine Dosis von ultraviolettem (UV) Licht mit geringer Intensität auf eine UV-härtbare Zusammensetzung aufgebracht. Das Ergebnis ist, dass die UV-härtende Zusammensetzung in einen höheren Viskositätszustand übergeht, aber nicht vollständig aushärtet. Dies wird auch als "Gelieren" bezeichnet.

Weiter kann nach dem Schritt b) ein abschließendes Härten durch Einwirkung von UV-Strahlung erfolgen. Dies kann durch eine UV-Leuchtdiode mit hoher Strahlungsintensität und/oder eine Quecksilberdampflampe erfolgen.

Bevorzugt wird die strahlungshärtbare, vorzugsweise UV-härtbare, Zusammensetzung in einem Digitaldruckverfahren, insbesondere Tintenstrahldruckverfahren, auf die Oberfläche des Substrats aufgebracht.

Unter dem Ausdruck "Digitaldruckverfahren" soll im Sinne der vorliegenden Erfindung ein Druckverfahren verstanden werden, bei dem das Druckbild direkt von einem Computer in eine Druckmaschine übertragen wird, ohne dass eine statische oder feste Druckform benutzt wird.

Unter dem Ausdruck "Tintenstrahldruckverfahren" soll im Sinne der vorliegenden Erfindung ein Verfahren verstanden werden, bei dem kleine Tröpfchen flüssiger Tinte erzeugt und auf ein Substrat aufgebracht werden. Dabei gibt es zum einen die Möglichkeit, einen kontinuierlichen Tintenstrahl zu erzeugen (Continuous Ink Jet, CIJ), oder zum anderen die Möglichkeit der diskontinuierlichen Erzeugung einzelner Tropfen, die nur bei Bedarf erzeugt und auf das Substrat übertragen werden (Drop-On Demand, DOD).

Weiter kann vor dem Aufbringen der strahlungshärtbaren, vorzugsweise UV-härtbaren, Zusammensetzung eine Primerzusammensetzung oder Unterdrucklackzusammensetzung schichtförmig, insbesondere in Form einer oder mehrerer Schichten, auf wenigstens einen Teil der Oberfläche des Substrats aufgebracht und anschließend die strahlungshärtbare, vorzugsweise UV-härtbare, Zusammensetzung in Form einer oder mehrerer Schichten auf die auf die Oberfläche des Substrats aufgebrachte Primer- oder Unterdrucklackzusammensetzung aufgebracht werden. Dabei kann die Primer- oder Unterdrucklackzusammensetzung grundsätzlich ebenfalls nur selektiv oder teilweise, das heißt nur abschnitts- oder bereichsweise, oder vollständig, das heißt vollflächig oder durchgehend, auf die Oberfläche des Substrats aufgebracht werden. Bei der Primer- oder Unterdrucklackzusammensetzung kann es sich um eine strahlungshärtbare, vorzugsweise UV-härtbare, oder um eine lösungsmittelbasierte Primer- oder Unterdrucklackzusammensetzung handeln. Insbesondere kann es sich bei der Primerzusammensetzung um eine UV-härtende Primerzusammensetzung, wie in der EP 3 453 687 A1 beschrieben, handeln. Der Offenbarungsgehalt der vorgenannten europäischen Offenlegungsschrift in Bezug auf die dort beschriebene UV-härtende Primerzusammensetzung wird durch ausdrückliche Bezugnahme zum Inhalt der vorliegenden Beschreibung gemacht.

Unter dem Ausdruck "Unterdrucklackzusammensetzung" soll im Sinne der vorliegenden Erfindung insbesondere eine Klarlackzusammensetzung mit Primerfunktion verstanden werden.

Weiter kann das Substrat, vorzugsweise zur Änderung seiner Oberflächeneigenschaften, vor dem Aufbringen der strahlungshärtbaren, vorzugsweise UV-härtbaren, Zusammensetzung und/oder vor dem Aufbringen der strahlungshärtbaren, vorzugsweise UV-härtbaren, Primerzusammensetzung vorbehandelt werden. Beispielsweise kann das Substrat durch Beflammen und/oder flammenpyrolytisches Beschichten, insbesondere Silikatisieren, vorbehandelt werden. Eine solche Vorbehandlung kann beispielsweise zweckmäßig sein, wenn das Substrat aus Glas besteht.

Bezüglich weiterer Merkmale und Vorteile des Verfahrens wird zur Vermeidung von Wiederholungen vollständig auf die im Rahmen des ersten Erfindungsaspekts gemachten Ausführungen Bezug genommen. Die dort insbesondere in Bezug auf die strahlungshärtbare, vorzugsweise UV-härtbare, Zusammensetzung beschriebenen Merkmale und Vorteile gelten sinngemäß auch für das Verfahren gemäß zweitem Erfindungsaspekt.

Gemäß einem dritten Aspekt betrifft die Erfindung ein Substrat, das heißt einen Bedruckstoff oder Druckträger, das mit einer strahlungsgehärteten, vorzugsweise UV-gehärteten, Zusammensetzung gemäß erstem Erfindungsaspekt beschichtet, insbesondere bedruckt, bevorzugt digital bedruckt, besonders bevorzugt tintenstrahlbedruckt, ist. Dabei kann das Substrat nur teilweise, das heißt nur abschnitts- oder bereichsweise, oder vollständig, das heißt vollflächig oder durchgehend, mit der strahlungsgehärteten, vorzugsweise UV-gehärteten, Zusammensetzung beschichtet, insbesondere bedruckt, bevorzugt digital bedruckt, besonders bevorzugt tintenstrahlbedruckt, sein.

Bevorzugt ist die strahlungsgehärtete, vorzugsweise UV-gehärtete, Zusammensetzung mehrschichtförmig auf dem Substrat, das heißt auf einer Oberfläche des Substrats, ausgebildet.

Weiter bevorzugt weist die strahlungsgehärtete, vorzugsweise UV-gehärtete, Zusammensetzung eine Schichtdicke von 0,3 mm bis 2 mm auf dem Substrat auf.

Weiter bevorzugt weist die strahlungsgehärtete, vorzugsweise UV-gehärtete, Zusammensetzung eine Glasübergangstemperatur von 20 °C bis 70 °C, insbesondere 20 °C bis 45 °C, vorzugsweise 25 °C bis 40 °C, auf.

Besonders bevorzugt tritt die strahlungsgehärtete, vorzugsweise UV-gehärtete, Zusammensetzung reliefartig oder tastbar aus der Oberfläche des Substrats hervor.

Das Substrat kann Glas, Kunststoff, Papier, Karton, Keramik, Metall oder eine Kombination von wenigstens zwei der vorgenannten Materialien aufweisen oder aus Glas, Kunststoff, Papier, Karton, Keramik, Metall oder aus einer Kombination von wenigsten zwei der vorgenannten Materialien bestehen. Insbesondere kann das Substrat als Flasche, Glas wie Trinkglas, Werbetafel, Spielzeug, Banner, Folie, Blech, Textilie, Verpackung wie Lebensmittelverpackung, Möbel, Glasscheibe oder Fußboden gestaltet sein.

Bezüglich weiterer Merkmale und Vorteile des Substrats wird zur Vermeidung von Wiederholungen ebenfalls vollständig auf die bisherige Beschreibung, insbesondere auf die im Rahmen des ersten Erfindungsaspekts gemachten Ausführungen, Bezug genommen. Die dort insbesondere in Bezug auf die strahlungshärtbare, vorzugsweise UV-härtbare, Zusammensetzung beschriebenen Merkmale und Vorteile gelten sinngemäß auch für das Substrat gemäß drittem Erfindungsaspekt.

Weitere Vorteile und Merkmale der Erfindung ergeben sich aus der nachfolgenden Beschreibung von bevorzugten Ausführungsformen in Form von Beispielen. Dabei können einzelne Merkmale jeweils für sich alleine oder in Kombination miteinander verwirklicht sein. Die nachfolgend beschriebenen Beispiele dienen lediglich der weiteren Erläuterung der Erfindung, ohne die Erfindung auf den Offenbarungsgehalt der Beispiele zu beschränken.

### BEISPIELTEIL

### 1 Prüfmethoden:

### 1.1 Verdruckbarkeit:

Die strahlungshärtbare Tinte wurde durch praktische Druckversuche mit einem Inkjet-Druckkopf auf Tropfenbildung und stabilem Druckverhalten, das heißt ohne Düsenausfälle untersucht und bewertet. Die Druckstabilität wurde als gut bewertet, wenn die Tropfenbildung funktionierte und es während des Druckvorganges zu keinen Düsenausfällen kam.

### 1.2 Geschirrspülmaschinenbeständigkeit:

Zunächst wurden Gläser durch Beflammung und Silikatisierung physikalisch vorbehandelt. Anschließend erfolgte eine chemische Vorbehandlung durch einen Glasprimer (z.B. Primer P5, Marabu GmbH & Co. KG). Danach wurden Gläser mit den strahlenhärtenden Zusammensetzungen per Inkjetdruck beschichtet.

Die Ermittlung der Geschirrspülmaschinenbeständigkeit erfolgte nach DIN EN 12875-2.

### 1.3 Alkoholbeständigkeit:

Ein Reinigungsstäbchen mit Schwamm wurde mit Ethanol getränkt und auf der Oberfläche der strahlungsgehärteten Zusammensetzungen gerieben. Die Alkoholbeständigkeit wurde mit OK bewertet, wenn kein Anlösen an der Filmoberfläche durch das Ethanol auftrat.

| | | **Beispiel 1** | **Beispiel 2** | **Gegenbeispiel 1** | **Gegenbeispiel 2** | **Gegenbeispiel 3** |
|---|---|---|---|---|---|---|
| Oligomer | Urethanacrylat | 24,15 | 27,15 | 18,2 | 24,2 | 24,15 |
| Monofunktionelles Acrylat-Monomer | 2-Phenoxyethylacrylat | 52,65 | 27,65 | 56,6 | 0 | 52,65 |
| Monofunktionelles Acrylat-Monomer | Isobornyacrylat | | 20 | | | 10 |
| Multifunktionelles Acrylat-Monomer | Hexandioldiacrylat | 13 | 15 | 15 | 65,6 | 3 |
| Photoinitiator | Ethyl-(2,4,6-Trimethylbenzoyl)phenyl-phosphinat | 10 | 10 | 10 | 10 | 10 |
| Tensidartiges Additiv (Verlaufsadditiv) | | 0,1 | 0,1 | 0,1 | 0,1 | 0,1 |
| Polymerer Radikalfänger (Stabilisator) | | 0,1 | 0,1 | 0,1 | 0,1 | 0,1 |
| **Summe** | | **100** | **100** | **100** | **100** | **100** |

| **Eigenschaften** | | | | | | |
|---|---|---|---|---|---|---|
| Viskosität [mPas] bei 40°C | | 70 | 93 | 40 | 70 | 63 |
| Anteil monofunktioneller Monomere [%] | | 52,65 | 47,65 | 56,6 | 0 | 62,65 |
| Anteil multifunktioneller Monomere [%] | | 13 | 15 | 15 | 65,6 | 3 |
| Anteil monofunktioneller und multifunktioneller Monomere [%] | | 65,65 | 62,65 | 71,6 | 65,6 | 65,65 |
| Verhältnis Summe Monomere zu Oligomer | | 2,72 | 2,31 | 3,93 | 2,71 | 2,72 |
| Verdruckbarkeit | | OK | OK | NOK | OK | OK |
| Geschirrspülmaschinenbeständigkeit | | OK | OK | nicht getestet | NOK | NOK |
| Alkoholbeständigkeit | | OK | OK | OK | OK | NOK |

Beispiel 1 und 2 stellen erfindungsgemäße Zusammensetzungen dar und erreichten gute Ergebnisse in der Verdruckbarkeit, Geschirrspülmaschinenbeständigkeit und der Alkoholbeständigkeit.

Gegenbeispiel 1 lag außerhalb des geforderten Viskositätsbereiches und zeigte keine gute Verdruckbarkeit. Auf Geschirrspülmaschinentests wurde mangeln brauchbarer Druckerzeugnisse verzichtet.

Das Gegenbeispiel 2 führte aufgrund des Mengen-Anteils multifunktioneller Acrylate zu schlechten Ergebnissen in den Geschirrspülmaschinentests.

Das Gegenbeispiel 3 führte aufgrund des Mengen-Anteils multifunktioneller Acrylate zu einer schlechten Alkoholbeständigkeit.

## Patentansprüche

1. Strahlungshärtbare, vorzugsweise UV-härtbare, Zusammensetzung, aufweisend
- wenigstens ein monofunktionelles Acrylat-Monomer und/oder Methacrylat-Monomer und/oder wenigstens ein monofunktionelles Acrylamid-Monomer,
- wenigstens ein multifunktionelles Acrylat-Monomer und/oder Methacrylat-Monomer
und
- wenigstens ein Oligomer und/oder wenigstens ein Polymer,
**dadurch gekennzeichnet, dass** die Zusammensetzung bei 40°C eine Viskosität von 50 mPas bis 150 mPas aufweist, wobei die Viskosität mit Hilfe eines Rheometers bei einer Schergeschwindigkeit von 2000 s⁻¹ gemessen wird.

2. Strahlungshärtbare Zusammensetzung nach Anspruch 1, **dadurch gekennzeichnet, dass** die Zusammensetzung bei 40 °C eine Viskosität von 50 mPas bis 125 mPas, vorzugsweise 50 mPas bis 100 mPas, aufweist.

3. Strahlungshärtbare Zusammensetzung nach Anspruch 1 oder 2, **dadurch gekennzeichnet, dass** das wenigstens eine monofunktionelle Acrylat-Monomer und/oder Methacrylat-Monomer ausgewählt ist aus der Gruppe bestehend aus 2-Phenoxyethylacrylat, Isobornylacrylat, n-Octyldecylacrylat, Cyclic-trimethylol-propanformalacrylat, Laurylacrylat, alkoxyliertes Laurylacrylat wie ethoxyliertes Laurylacrylat, Isodecylacrylat, Caprolactonacrylat, 3,3,5-Trimethylcyclohexylacrylat, 4-Hydroxybutylacrylat, Isooctylacrylat, 2-(2-Ethoxyethoxy)ethylacrylat, Butylacrylat, Benzylacrylat, 2-(1,1-Dimethylethyl)cyclohexylacrylat, 3-(1,1-Dimethylethyl)cyclohexylacrylat, 4-(1,1-Dimethylethyl)cyclohexylacrylat, ethoxyliertes Phenylacrylat, alkoxyliertes Nonylphenolacrylat, O-phenylphenoxyethylacrylat, Phenoxybenzylacrylat, Trimethylcyclohexylacrylat, Tridecylacrylat, 4-tert-Butylcyclohexylacrylat, Behenylacrylat, Stearylacrylat, Isobornylmethacrylat, 4-tert.-Butylcyclohexylmethacrylat, Laurylmethacrylat, Isodecylmethacrylat, 2-Phenoxyethylmethacrylat, Isooctylmethacrylat, Benzylmethacrylat, Cyclohexylmethacrylat, 3,3,5-Trimethylcyclohexylmethacrylat, alkoxyliertes Nonylphenolmethacrylat, Hydroxyethylmethacrylat, 2-N-Morpholinoethylmethacrylat und Mischungen von wenigstens zwei der vorgenannten monofunktionellen Acrylat-Monomere und/oder Methacrylat-Monomere.

4. Strahlungshärtbare Zusammensetzung nach einem der vorhergehenden Ansprüche, **dadurch gekennzeichnet, dass** das wenigstens eine monofunktionelle Acrylat-Monomer und/oder Methacrylat-Monomer und/oder wenigstens eine Acrylamid-Monomer einen Anteil von 20 Gew.-% bis 80 Gew.-%, insbesondere 30 Gew.-% bis 70 Gew.-%, vorzugsweise 40 Gew.-% bis 60 Gew.-%, aufweist, bezogen auf das Gesamtgewicht der Zusammensetzung.

5. Strahlungshärtbare Zusammensetzung nach einem der vorhergehenden Ansprüche, **dadurch gekennzeichnet, dass** das wenigstens eine multifunktionelle Acrylat-Monomer und/oder Methacrylat-Monomer ausgewählt ist aus der Gruppe bestehend aus (Octahydro-4,7-methano-1H-indendiyl)bis(methylen)diacrylat, Tricyclodecandimethanoldiacrylat, Butandioldiacrylat, 1,2-Ethylenglykoldiacrylat, 1,12-Dodecanoldiacrylat, 1,10-Decandioldiacrylat, Esterdioldiacrylat, propoxyliertes 2-Neopentylglycoldiacrylat, Tris-(2-Hydroxyethyl)-isocyanurattriacrylat, propoxyliertes Neopentylglykoldiacrylat, Hexandioldiacrylat, Tripropylenglykoldiacrylat, Tetraethylenglykoldiacrylat, Dipropylenglykoldiacrylat, alkoxyliertes Hexandioldiacrylat, 3-Methyl-1,5-pentandioldiacrylat, alkoxyliertes Cyclohexandimethanoldiacrylat, Tricyclodecandimethanoldiacrylat, Trimethylolpropantriacrylat, alkoxyliertes Trimethylolpropantriacrylat, ethoxyliertes Trimethylolpropantriacrylat, Glycerolpropoxylattriacrylat, Pentaerythritoltriacrylat, Dipentaerythritolpentaacrylat, Dipentaerythritolhexaacrylat, ethoxyliertes Pentaerythritoltetraacrylat, Pentaerythritoltetraacrylat, Ditrimethylolpropantetraacrylat, Polyethylenglycoldiacrylate, 1,2-Ethylenglykoldimethacrylat, 1,12-Dodecanoldimethacrylat, Tris-(2-hydroxyethyl)-isocyanurattrimethacrylat, Hexandioldimethacrylat, ethoxyliertes Bisphenol-A-dimethacrylat, Trimethylolpropantrimethacrylat, Pentaerythritoltetramethacrylat und Mischungen von wenigstens zwei der vorgenannten multifunktionellen Acrylat-Monomere und/oder Methacrylat-Monomere.

6. Strahlungshärtbare Zusammensetzung nach einem der vorhergehenden Ansprüche, **dadurch gekennzeichnet, dass** das wenigstens eine multifunktionelle Acrylat-Monomer und/oder Methacrylat-Monomer einen Anteil von 5 Gew.-% bis 40 Gew.-%, insbesondere 5 Gew.-% bis 30 Gew.-%, vorzugsweise 5 Gew.-% bis 25 Gew.-%, aufweist, bezogen auf das Gesamtgewicht der Zusammensetzung.

7. Strahlungshärtbare Zusammensetzung nach einem der vorhergehenden Ansprüche, **dadurch gekennzeichnet, dass** es sich bei dem wenigstens einen monofunktionellen Acrylamid-Monomer um 4-Acryloylmorpholin handelt.

8. Strahlungshärtbare Zusammensetzung nach einem der vorhergehenden Ansprüche, **dadurch gekennzeichnet, dass** sie ferner wenigstens ein N-Vinylamid-Monomer und/oder wenigstens ein Vinylacrylat-Monomer, insbesondere ausgewählt aus der Gruppe bestehend aus N-Vinylcaprolactam, N-Vinylpyrrolidon, Vinylmethyloxazolidinon (VMOX), 2-(2-Vinyloxyethoxy)ethylacrylat (VEEA), 2-(2-Vinyloxyethoxy)ethylmethacrylat und Mischungen von wenigstens zwei der vorgenannten Monomere, aufweist.

9. Strahlungshärtbare Zusammensetzung nach einem der vorhergehenden Ansprüche, **dadurch gekennzeichnet, dass** das wenigstens eine Oligomer bei 40 °C eine Viskosität von 2000 mPas bis 20000 mPas, insbesondere 3000 mPas bis 15000 mPas, vorzugsweise 4000 mPas bis 10000 mPas, aufweist.

10. Strahlungshärtbare Zusammensetzung nach einem der vorhergehenden Ansprüche, **dadurch gekennzeichnet, dass** das wenigstens eine Oligomer einen Anteil von 10 Gew.-% bis 50 Gew.-%, insbesondere 20 Gew.-% bis 50 Gew.-%, vorzugsweise 20 Gew.-% bis 40 Gew.-%, aufweist, bezogen auf das Gesamtgewicht der Zusammensetzung.

11. Strahlungshärtbare Zusammensetzung nach einem der vorhergehenden Ansprüche, **dadurch gekennzeichnet, dass** es sich bei dem wenigstens einen Oligomer um wenigstens ein reaktives Oligomer, vorzugsweise um wenigstens ein Acrylat-Oligomer und/oder wenigstens ein Methacrylat-Oligomer, handelt, vorzugsweise ausgewählt aus der Gruppe bestehend aus Epoxyacrylate, Polyesteracrylate, aliphatische Urethanacrylate, aromatische Urethanacrylate, Polyetheracrylate, Silikonacrylate, Melaminacrylate, dendritische Acrylate, aminmodifizierte Acrylate, Epoxymethacrylate, Polyestermethacrylate, aliphatische Urethanmethacrylate, aromatische Urethanmethacrylate, Polyethermethacrylate Silikonmethacrylate, Melaminmethacrylate, dendritische Methacrylate, aminmodifizierte Methacrylate und Mischungen von wenigstens zwei der vorgenannten Oligomere.

12. Strahlungshärtbare Zusammensetzung nach einem der vorhergehenden Ansprüche, **dadurch gekennzeichnet, dass** sie einen Anteil von dem wenigstens einen monofunktionellen Acrylat-Monomer und/oder Methacrylat-Monomer und/oder wenigstens ein Acrlyamid-Monomer und dem wenigstens einen multifunktionellen Acrylat-Monomer und/oder Methacrylat-Monomer zu dem wenigstens einen Oligomer von < 4:1, insbesondere 1,5 : 1 zu 3,5 : 1, vorzugsweise 2 : 1 zu 3,5 : 1, aufweist.

13. Strahlungshärtbare Zusammensetzung nach einem der vorhergehenden Ansprüche, **dadurch gekennzeichnet, dass** das wenigstens eine Polymer einen Anteil von 10 Gew.-% bis 50 Gew.-%, insbesondere 20 Gew.-% bis 50 Gew.-%, vorzugsweise 20 Gew.-% bis 40 Gew.-%, aufweist, bezogen auf das Gesamtgewicht der Zusammensetzung und/oder, das wenigstens eine Polymer ein Molekulargewicht, insbesondere gewichtsmittleres Molekulargewicht, von > 30000 Da, insbesondere 30000 Da bis 100000 Da, bevorzugt 40000 Da bis 70000 Da, aufweist und/oder
das wenigstens eine Polymer eine Glasübergangstemperatur von 25°C bis 105°C, insbesondere 25°C bis 90°C, bevorzugt 40°C bis 90°C, besonders bevorzugt 40°C bis 80°C, aufweist und/oder
es sich bei dem wenigstens einen Polymer um wenigstens ein nicht strahlungshärtbares Polymer und/oder wenigstens ein strahlungshärtbares Polymer handelt, insbesondere ausgewählt aus der Gruppe bestehend aus Epoxy-Harz, Polyester-Harz, Vinyl-Harz, Keton-Harz, Aldehyd-Harz, Nitrocellulose-Harz, Phenoxy-Harz, Acrylat-Harz und Mischungen von wenigstens zwei der vorgenannten Polymere.

14. Verfahren zum Beschichten, insbesondere Bedrucken, eines Substrats aufweisend nachfolgende Schritte:
a) Aufbringen, insbesondere schichtförmiges Aufbringen, einer strahlungshärtbaren Zusammensetzung nach einem der vorhergehenden Ansprüche auf eine Oberfläche des Substrats und
b) Härten der aufgebrachten, insbesondere schichtförmig aufgebrachten, strahlungshärtbaren Zusammensetzung durch Einwirken elektromagnetischer Strahlung, insbesondere UV-Strahlung.

15. Substrat, beschichtet, insbesondere bedruckt, mit einer strahlungsgehärteten, vorzugsweise UV-gehärteten, Zusammensetzung nach einem der Ansprüche 1 bis 13.

## Claims

1. Radiation-curable, preferably UV-curable, composition comprising
- at least one monofunctional acrylate monomer and/or methacrylate monomer and/or at least one monofunctional acrylamide monomer,
- at least one multifunctional acrylate monomer and/or methacrylate monomer
and
- at least one oligomer and/or at least one polymer,
**characterized in that** the composition at 40°C has a viscosity of 50 mPas to 150 mPas, where the viscosity is measured with the aid of a rheometer at a shear rate of 2000 s⁻¹.

2. Radiation-curable composition according to Claim 1, **characterized in that** the composition at 40°C has a viscosity of 50 mPas to 125 mPas, preferably 50 mPas to 100 mPas.

3. Radiation-curable composition according to Claim 1 or 2, **characterized in that** the at least one monofunctional acrylate monomer and/or methacrylate monomer is selected from the group consisting of 2-phenoxyethyl acrylate, isobornyl acrylate, n-octyldecyl acrylate, cyclic trimethylolpropane formal acrylate, lauryl acrylate, alkoxylated lauryl acrylate such as ethoxylated lauryl acrylate, isodecyl acrylate, caprolactone acrylate, 3,3,5-trimethylcyclohexyl acrylate, 4-hydroxybutyl acrylate, isooctyl acrylate, 2-(2-ethoxyethoxy)ethyl acrylate, butyl acrylate, benzyl acrylate, 2-(1,1-dimethylethyl)cyclohexyl acrylate, 3-(1,1-dimethylethyl)cyclohexyl acrylate, 4-(1,1-dimethylethyl)cyclohexyl acrylate, ethoxylated phenyl acrylate, alkoxylated nonylphenol acrylate, O-phenylphenoxyethyl acrylate, phenoxybenzyl acrylate, trimethylcyclohexyl acrylate, tridecyl acrylate, 4-tert-butylcyclohexyl acrylate, behenyl acrylate, stearyl acrylate, isobornyl methacrylate, 4-tert-butylcyclohexyl methacrylate, lauryl methacrylate, isodecyl methacrylate, 2-phenoxyethyl methacrylate, isooctyl methacrylate, benzyl methacrylate, cyclohexyl methacrylate, 3,3,5-trimethylcyclohexyl methacrylate, alkoxylated nonylphenol methacrylate, hydroxyethyl methacrylate, 2-N-morpholinoethyl methacrylate and mixtures of at least two of the aforementioned monofunctional acrylate monomers and/or methacrylate monomers.

4. Radiation-curable composition according to any of the preceding claims, **characterized in that** the at least one monofunctional acrylate monomer and/or methacrylate monomer and/or at least one acrylamide monomer has a proportion of 20% by weight to 80% by weight, especially 30% by weight to 70% by weight, preferably 40% by weight to 60% by weight, based on the total weight of the composition.

5. Radiation-curable composition according to any of the preceding claims, **characterized in that** the at least one multifunctional acrylate monomer and/or methacrylate monomer is selected from the group consisting of (octahydro-4,7-methano-1H-indenediyl)bis(methylene) diacrylate, tricyclodecanedimethanol diacrylate, butanediol diacrylate, 1,2-ethylene glycol diacrylate, dodecane-1,12-diol diacrylate, decane-1,10-diol diacrylate, esterdiol diacrylate, propoxylated 2-neopentyl glycol diacrylate, tris(2-hydroxyethyl) isocyanurate triacrylate, propoxylated neopentyl glycol diacrylate, hexanediol diacrylate, tripropylene glycol diacrylate, tetraethylene glycol diacrylate, dipropylene glycol diacrylate, alkoxylated hexanediol diacrylate, 3-methylpentane-1,5-diol diacrylate, alkoxylated cyclohexanedimethanol diacrylate, tricyclodecanedimethanol diacrylate, trimethylolpropane triacrylate, alkoxylated trimethylolpropane triacrylate, ethoxylated trimethylolpropane triacrylate, glycerol propoxylate triacrylate, pentaerythritol triacrylate, dipentaerythritol pentaacrylate, dipentaerythritol hexaacrylate, ethoxylated pentaerythritol tetraacrylate, pentaerythritol tetraacrylate, ditrimethylolpropane tetraacrylate, polyethylene glycol diacrylates, 1,2-ethylene glycol dimethacrylate, dodecane-1,12-diol dimethacrylate, tris(2-hydroxyethyl) isocyanurate trimethacrylate, hexanediol dimethacrylate, ethoxylated bisphenol A dimethacrylate, trimethylolpropane trimethacrylate, pentaerythritol tetramethacrylate and mixtures of at least two of the aforementioned multifunctional acrylate monomers and/or methacrylate monomers.

6. Radiation-curable composition according to any of the preceding claims, **characterized in that** the at least one multifunctional acrylate monomer and/or methacrylate monomer has a proportion of 5% by weight to 40% by weight, especially 5% by weight to 30% by weight, preferably 5% by weight to 25% by weight, based on the total weight of the composition.

7. Radiation-curable composition according to any of the preceding claims, **characterized in that** the at least one monofunctional acrylamide monomer is 4-acryloylmorpholine.

8. Radiation-curable composition according to any of the preceding claims, **characterized in that** it further comprises at least one N-vinylamide monomer and/or at least one vinyl acrylate monomer, especially selected from the group consisting of N-vinylcaprolactam, N-vinylpyrrolidone, vinylmethyloxazolidinone (VMOX), 2-(2-vinyloxyethoxy)ethyl acrylate (VEEA), 2-(2-vinyloxyethoxy)ethyl methacrylate and mixtures of at least two of the aforementioned monomers.

9. Radiation-curable composition according to any of the preceding claims, **characterized in that** the at least one oligomer at 40°C has a viscosity of 2000 mPas to 20 000 mPas, especially 3000 mPas to 15 000 mPas, preferably 4000 mPas to 10 000 mPas.

10. Radiation-curable composition according to any of the preceding claims, **characterized in that** the at least one oligomer has a proportion of 10% by weight to 50% by weight, especially 20% by weight to 50% by weight, preferably 20% by weight to 40% by weight, based on the total weight of the composition.

11. Radiation-curable composition according to any of the preceding claims, **characterized in that** the at least one oligomer is at least one reactive oligomer, preferably at least one acrylate oligomer and/or at least one methacrylate oligomer, preferably selected from the group consisting of epoxy acrylates, polyester acrylates, aliphatic urethane acrylates, aromatic urethane acrylates, polyether acrylates, silicone acrylates, melamine acrylates, dendritic acrylates, amine-modified acrylates, epoxy methacrylates, polyester methacrylates, aliphatic urethane methacrylates, aromatic urethane methacrylates, polyether methacrylates, silicone methacrylates, melamine methacrylates, dendritic methacrylates, amine-modified methacrylates and mixtures of at least two of the aforementioned oligomers.

12. Radiation-curable composition according to any of the preceding claims, **characterized in that** it has a proportion of the at least one monofunctional acrylate monomer and/or methacrylate monomer and/or at least one acrylamide monomer and the at least one multifunctional acrylate monomer and/or methacrylate monomer to the at least one oligomer of < 4:1, especially 1.5: 1 to 3.5: 1, preferably 2: 1 to 3.5: 1.

13. Radiation-curable composition according to any of the preceding claims, **characterized in that** the at least one polymer has a proportion of 10% by weight to 50% by weight, especially 20% by weight to 50% by weight, preferably 20% by weight to 40% by weight, based on the total weight of the composition, and/or the at least one polymer has a molecular weight, especially weight-average molecular weight, of > 30 000 Da, especially 30 000 Da to 100 000 Da, preferably 40 000 Da to 70 000 Da, and/or the at least one polymer has a glass transition temperature of 25°C to 105°C, especially 25°C to 90°C, preferably 40°C to 90°C, more preferably 40°C to 80°C, and/or
the at least one polymer is at least one non-radiation-curable polymer and/or at least one radiation-curable polymer, especially selected from the group consisting of epoxy resin, polyester resin, vinyl resin, ketone resin, aldehyde resin, nitrocellulose resin, phenoxy resin, acrylate resin and mixtures of at least two of the aforementioned polymers.

14. Method of coating, especially printing, a substrate, having the following steps:
a) applying, especially in layers, a radiation-curable composition according to any of the preceding claims to a surface of the substrate and
b) curing the radiation-curable composition applied, especially in layers, by the action of electromagnetic radiation, especially UV radiation.

15. Substrate coated, especially printed, with a radiation-cured, preferably UV-cured, composition according to any of Claims 1 to 13.

## Revendications

1. Composition durcissable par rayonnement, de préférence durcissable par des UV, comprenant
- au moins un monomère monofonctionnel d'acrylate et/ou monomère monofonctionnel de méthacrylate et/ou au moins un monomère monofonctionnel d'acrylamide,
- au moins un monomère multifonctionnel d'acrylate et/ou monomère multifonctionnel de méthacrylate
et
- au moins un oligomère et/ou au moins un polymère,
**caractérisée en ce que** la composition présente une viscosité à 40 °C de 50 mPas à 150 mPas, dans laquelle la viscosité est mesurée à l'aide d'un rhéomètre à une vitesse de cisaillement de 2 000 s⁻¹.

2. Composition durcissable par rayonnement selon la revendication 1, **caractérisée en ce que** la composition présente une viscosité à 40 °C de 50 mPas à 125 mPas, de préférence de 50 mPas à 100 mPas.

3. Composition durcissable par rayonnement selon la revendication 1 ou 2, **caractérisée en ce que** l'au moins un monomère monofonctionnel d'acrylate et/ou monomère monofonctionnel de méthacrylate est choisi dans le groupe constitué par acrylate de 2-phénoxyéthyle, acrylate d'isobornyle, acrylate de n-octyldécyle, acrylate de triméthylolpropaneformal cyclique, acrylate de lauryle, acrylate de lauryle alcoxylé tel que l'acrylate de lauryle éthoxylé, acrylate d'isodécyle, acrylate de caprolactone, acrylate de 3,3,5-triméthylcyclohexyle, acrylate de 4-hydroxybutyle, acrylate d'isooctyle, acrylate de 2-(2-éthoxyéthoxy)éthyle, acrylate de butyle, acrylate de benzyle, acrylate de 2-(1,1-diméthyléthyl)cyclohexyle, acrylate de 3-(1,1-diméthyléthyl)cyclohexyle, acrylate de 4-(1,1-diméthyléthyl)cyclohexyle, acrylate de phényle éthoxylé, acrylate de nonylphénol alcoxylé, acrylate d'o-phénylphénoxyéthyle, acrylate de phénoxybenzyle, acrylate de triméthylcyclohexyle, acrylate de tridécyle, acrylate de 4-tert-butylcyclohexyle, acrylate de béhényle, acrylate de stéaryle, méthacrylate d'isobornyle, méthacrylate de 4-tert-butylcyclohexyle, méthacrylate de lauryle, méthacrylate d'isodécyle, méthacrylate de 2-phénoxyéthyle, méthacrylate d'isooctyle, méthacrylate de benzyle, méthacrylate de cyclohexyle, méthacrylate de 3,3,5-triméthylcyclohexyle, méthacrylate de nonylphénol alcoxylé, méthacrylate d'hydroxyéthyle, méthacrylate de 2-N-morpholinoéthyle et des mélanges d'au moins deux des monomères monofonctionnels d'acrylate et/ou monomères monofonctionnels de méthacrylate susmentionnés.

4. Composition durcissable par rayonnement selon l'une quelconque des revendications précédentes, **caractérisée en ce que** l'au moins un monomère monofonctionnel d'acrylate et/ou monomère monofonctionnel de méthacrylate et/ou au moins un monomère d'acrylamide présente une proportion de 20 % en poids à 80 % en poids, en particulier de 30 % en poids à 70 % en poids, de préférence de 40 % en poids à 60 % en poids, par rapport au poids total de la composition.

5. Composition durcissable par rayonnement selon l'une quelconque des revendications précédentes, **caractérisée en ce que** l'au moins un monomère multifonctionnel d'acrylate et/ou monomère multifonctionnel de méthacrylate est choisi dans le groupe constitué par (octahydro-4,7-méthano-1H-indènediyl)bis(méthylène)diacrylate, diacrylate de diméthanol tricyclodécane, diacrylate de butanediol, diacrylate de 1,2-éthylène glycol, diacrylate de 1,12-dodécanol, diacrylate de 1,10-décanediol, diacrylate d'ester diol, diacrylate de 2-néopentyl glycol propoxylé, triacrylate de tris-(2-hydroxyéthyl)-isocyanurate, diacrylate de néopentyl glycol propoxylé, diacrylate d'hexanediol, diacrylate de tripropylène glycol, diacrylate de tétraéthylène glycol, diacrylate de dipropylène glycol, diacrylate d'hexanediol alcoxylé, diacrylate de 3-méthyl-1,5-pentanediol, diacrylate de cyclohexanediméthanol alcoxylé, diacrylate de diméthanol tricyclodécane, triacrylate de triméthylolpropane, triacrylate de triméthylolpropane alcoxylé, triacrylate de triméthylolpropane éthoxylé, triacrylate de glycérolpropoxylate, triacrylate de pentaérythritol, pentaacrylate de dipentaérythritol, hexaacrylate de dipentaérythritol, tétraacrylate de pentaérythritol éthoxylé, tétraacrylate de pentaérythritol, tétraacrylate de ditriméthylolpropane, diacrylates de polyéthylène glycol, diméthacrylate de 1,2-éthylène glycol, diméthacrylate de 1,12-dodécanol, triméthacrylate de tris-(2-hydroxyéthyl) isocyanurate, diméthacrylate d'hexanediol, diméthacrylate de bisphénol A éthoxylé, triméthacrylate de triméthylolpropane, tétraméthacrylate de pentaérythritol et des mélanges d'au moins deux des monomères multifonctionnels d'acrylate et/ou monomères multifonctionnels de méthacrylate susmentionnés.

6. Composition durcissable par rayonnement selon l'une quelconque des revendications précédentes, **caractérisée en ce que** l'au moins un monomère multifonctionnel d'acrylate et/ou monomère multifonctionnel de méthacrylate présente une proportion de 5 % en poids à 40 % en poids, en particulier de 5 % en poids à 30 % en poids, de préférence de 5 % en poids à 25 % en poids, par rapport au poids total de la composition.

7. Composition durcissable par rayonnement selon l'une quelconque des revendications précédentes, **caractérisée en ce que** l'au moins un monomère monofonctionnel d'acrylamide est la 4-acryloylmorpholine.

8. Composition durcissable par rayonnement selon l'une quelconque des revendications précédentes, **caractérisée en ce qu'**elle présente en outre au moins un monomère de N-vinylamide et/ou au moins un monomère d'acrylate de vinyle, en particulier choisi dans le groupe constitué par N-vinylcaprolactame, N-vinylpyrrolidone, vinylméthyloxazolidinone (VMOX), acrylate de 2-(2-vinyloxyéthoxy)éthyle (VEEA), méthacrylate de 2-(2-vinyloxyéthoxy)éthyle et des mélanges d'au moins deux des monomères susmentionnés.

9. Composition durcissable par rayonnement selon l'une quelconque des revendications précédentes, **caractérisée en ce que** l'au moins un oligomère présente une viscosité à 40 °C de 2 000 mPas à 20 000 mPas, en particulier de 3 000 mPas à 15 000 mPas, de préférence de 4 000 mPas à 10 000 mPas.

10. Composition durcissable par rayonnement selon l'une quelconque des revendications précédentes, **caractérisée en ce que** l'au moins un oligomère présente une proportion de 10 % en poids à 50 % en poids, en particulier 20 % en poids à 50 % en poids, de préférence 20 % en poids à 40 % en poids, par rapport au poids total de la composition.

11. Composition durcissable par rayonnement selon l'une quelconque des revendications précédentes, **caractérisée en ce que** l'au moins un oligomère est au moins un oligomère réactif, de préférence au moins un oligomère d'acrylate et/ou au moins un oligomère de méthacrylate, de préférence choisi dans le groupe constitué par les époxyacrylates, les acrylates de polyester, les acrylates d'uréthane aliphatiques, les acrylates d'uréthane aromatiques, les acrylates de polyéther, les acrylates de silicone, les acrylates de mélamine, les acrylates dendritiques, les acrylates modifiés par une amine, les époxyméthacrylates, les méthacrylates de polyester, les méthacrylates d'uréthane aliphatiques, les méthacrylates d'uréthane aromatiques, les méthacrylates de polyéther, les méthacrylates de silicone, les méthacrylates de mélamine, les méthacrylates dendritiques, les méthacrylates modifiés par une amine et les mélanges d'au moins deux des oligomères susmentionnés.

12. Composition durcissable par rayonnement selon l'une quelconque des revendications précédentes, **caractérisée en ce qu'**elle présente une proportion de l'au moins un monomère monofonctionnel d'acrylate et/ou monomère monofonctionnel de méthacrylate et/ou au moins un monomère d'acrylamide et de l'au moins un monomère multifonctionnel d'acrylate et/ou monomère multifonctionnel de méthacrylate sur l'au moins un oligomère de < 4:1, en particulier 1,5 : 1 à 3,5 : 1, de préférence 2 : 1 à 3,5 : 1.

13. Composition durcissable par rayonnement selon l'une quelconque des revendications précédentes, **caractérisée en ce que** l'au moins un polymère présente une proportion de 10 % en poids à 50 % en poids, en particulier de 20 % en poids à 50 % en poids, de préférence de 20 % en poids à 40 % en poids, par rapport au poids total de la composition et/ou l'au moins un polymère présente un poids moléculaire, en particulier un poids moléculaire moyen en poids, de > 30 000 Da, en particulier 30 000 Da à 100 000 Da, de préférence 40 000 Da à 70 000 Da, et/ou l'au moins un polymère présente une température de transition vitreuse de 25 °C à 105 °C, en particulier de 25 °C à 90 °C, préférablement de 40 °C à 90 °C, de manière particulièrement préférée 40 °C à 80 °C, et/ou
**en ce que** l'au moins un polymère est au moins un polymère non durcissable par rayonnement et/ou au moins un polymère durcissable par rayonnement, en particulier choisi dans le groupe constitué par une résine époxy, une résine de polyester, une résine vinylique, une résine de cétone, une résine d'aldéhyde, une résine de nitrocellulose, une résine phénoxy, une résine d'acrylate et des mélanges d'au moins deux des polymères susmentionnés.

14. Procédé de revêtement, en particulier d'impression, d'un substrat comprenant les étapes suivantes :
a) application, en particulier application sous forme de couche, d'une composition durcissable par rayonnement selon l'une quelconque des revendications précédentes sur une surface du substrat et
b) durcissement de la composition durcissable par rayonnement appliquée, en particulier appliquée sous forme de couche, par l'action d'un rayonnement électromagnétique, en particulier un rayonnement UV.

15. Substrat, revêtu, en particulier imprimé, par une composition durcie par rayonnement, de préférence durcie par des UV, selon l'une quelconque des revendications 1 à 13.
